# EUROPEAN PATENT SPECIFICATION

(11) **EP 1 599 798 B1**
(45) Date of publication and mention of the grant of the patent: **07.05.2008**
(21) Application number: 04717632.6
(22) Date of filing: 05.03.2004
(51) Int. Cl.: G06F 9/445

(54) **A METHOD FOR GENERATING A COMPUTER PROGRAM AND A COMPUTER PROGRAM PRODUCT**
VERFAHREN ZUR ERZEUGUNG EINES COMPUTERPROGRAMMS UND EINES COMPUTERPROGRAMMPRODUKTS
PROCEDE DE GENERATION D'UN PROGRAMME INFORMATIQUE ET PROGICIEL

(30) Priority: 06.03.2003 DE 10310998; 31.03.2003 WO PCT/EP03/03352
(43) Date of publication of application: 30.11.2005
(73) Proprietor: SAP AG, 69190 Walldorf (DE)
(72) Inventor: WESTENDORF, Frank, 76698 Ubstadt-Weiher (DE); GAUB, Martin, 69168 Wiesloch (DE)
(74) Representative: Hössle Kudlek & Partner
(86) International application number: PCT/EP2004/002305
(87) International publication number: WO 2004/079476

(56) References cited:
- EP-A- 0 802 480
- US-A1- 2002 133 814
- US-A1- 2002 191 014
- US-B1- 6 282 711
- "TABLE-DRIVEN SELECTIVE SOFTWARE DOWNLOAD" IBM TECHNICAL DISCLOSURE BULLETIN, IBM CORP. NEW YORK, US, vol. 32, no. 9B, 1 February 1990 (1990-02-01), pages 40-41, XP000082223 ISSN: 0018-8689

## Description

### Field of the invention

The present invention relates to the field of generating computer programs and more particularly to a method for generating a computer program which can be easily customized by a user installing the computer program. The invention further relates to a computer program product with a computer-readable medium and a computer program stored on the computer-readable medium with program coding means which are suitable for carrying out such a method when the computer program is run on a computer system.

### Description of the Related Art

In the field of computer program technology, it is known to pack large computer programs before they are stored on a suitable carrier in case the computer program is too large for the space available on the computer program carrier. In the case of very large programs it is also known to divide a program into several packages of a size fitting on a given storage carrier. When the computer program is installed, the user loads the content of the more than one data carriers onto his computer where the packages are put back together when unpacked in order to generate the computer program on the computer system of the user.

It is also known that a computer program, upon download installation by a user, can be customized. For this, the installation or setup routine of the program comprises an interactive window which can be used by the user to define whether he wishes standard settings or customized settings to be set up. In case he opts for customized settings, there are computer programs which ask for an extensive amount of set up details to be provided by the user in order to design the desired "shape" of the one version of the computer program to be executed on the user's system.

However, this requires a profound knowledge of the design and the design possibilities of the computer program to be installed on behalf of the user. Further, the customized installation of a complex computer program takes a very long time.

[0004a] EP 0 802 480 A1 discloses a multiple-package distribution software pack and installation of the same, with the installation of the entire software being split into installation of each dominant or primary package and installation of the dependent or secondary packages dependent on that dominant package. The disclosed system allows for installation of the dependent packages first or last depending upon the constraints of the target system, and also allows for immediate or deferred installation of the dominant package.

[0004b] US 2002/0133814 A1 discloses a system to facilitate installation of software components with an interface for identifying which components a user decides to install on one or more computers. The disclosed system includes selected components to be installed and determining an installation procedure based on dependency requirements for the selected components.

### Summary of the Invention

It is therefore an object of the invention to provide a method for generating and for installing a computer program as well as a setup system for a computer program which overcome the disadvantages known in the prior art. More particularly, it is an object of the invention to provide a method for generating and for installing a computer program and a setup system for a computer program which allows a user to generate and design a customized computer program fast and easy and without being required to have profound knowledge of the computer program to be installed. This object is achieved by proposing a method with the features of claim 1 and a set up system with the features of claim 11 as well as a computer program with the features of claims 17.

This method includes all possible parts of computer programs like functions, process descriptions, table and/or object design descriptions, table data and/or file data, configuration data, etc.

Accordingly, the computer program is divided into a plurality of packages in modular manner, the packages corresponding to functional subunits of the computer program and representing in their entirety the complete computer program, the packages being individually selectable by a user when installing the computer program on a computer system in order to create a customized computer program. This allows a user to select whole functional subunits when setting up a computer program instead of having to select each and every function of the computer program to be "designed", i.e. to be custom-installed. This enables users without detailed knowledge of computer technology and/or a given computer program to generate a customized computer program as they merely have to choose from modular packages corresponding to functional subunits of the computer program, thus allowing for fast, easy and reliable design setup of a customized computer program.

Advantageously, the plurality of packages, comprise at least one core package and at least one additional package, a core package representing a base computer program module forming the basis for at/on computer program modules contained in the additional package(s). This allows an inexperienced user to set up a computer program correctly by selecting base modules first and subsequently building up the customized computer program by choosing add-on modules. Preferably, each computer program comprises exactly one core package which is the basic subunit of the computer program and provides all the basic functions of the computer program, the core package being able to be installed and run independently from the additional packages which provide add-on functions.

In the context of this invention, the term "to install" is to be understood in the sense of setting up a computer program on a user's computer or computer system. Particularly, the term "to install" in the context of this invention is aimed to describe the action a user is taking in order to create his customized computer program application on the basis of the modularly built up program according to the invention, the latter being already loaded down on the user's system with all its plurality of packages and serving the user to create at his discretion one or more customized computer program applications according to his wishes. Thus, the invention treats the manner how to set up or how to configurate a computer program divided into a plurality of packages that is already resident on a user's computer.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the Drawings

In the drawings,
Figure 1 is a schematic illustration of a computer program divided into a plurality of modular packages;
Figure 2 is a schematic illustration of a requirement profile of a user towards a computer program; and
Figure 3 is a schematic illustration of how the requirement profile of Figure 2 is met with a customized computer program generated according to invention.

### Detailed Description

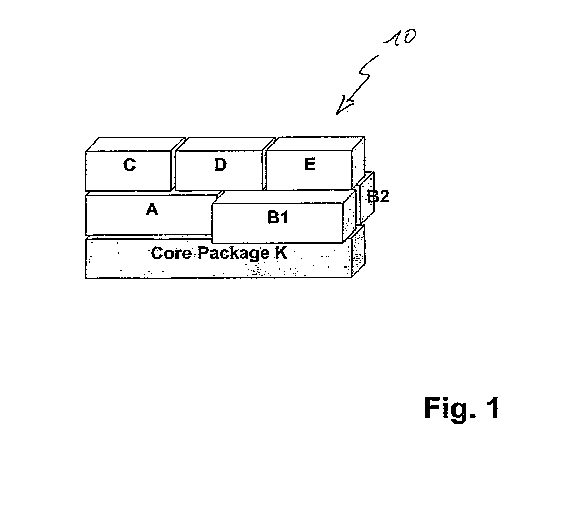

Figure 1 shows in schematic representation a computer program 10 according to the invention divided into a plurality of packages in modular manner. In the embodiment shown in Figure 1, the computer program 10 consists of a core package K and additional packages A, B1, B2, C, D and E. Packages K and A to E represent in their entirety the complete and full computer program with all possible functions, each package comprising a functional subunit of the computer program. Each subunit of the computer program consists of a multitude of functions and contains customizing rules.

Core package K represents the smallest independent functional subunit of the computer program 10, i.e. the computer program 10 could be installed by only selecting the core package K and would then constitute a customized computer program stripped down to its basic functions.

In the additional packages A to E, all optional functions and subunits of the computer program are contained.

Core packages do not require any other packages and constitute, as described above independent software solutions. Advantageously, a computer program according to the invention comprises exactly one core package which determines the nature of the computer program. This means that core packages cannot be combined with other (core) packages but only with additional packages. This makes the set up of a customized computer program very easy for a user. Each of the additional packages requires at least one further package, i.e. a core package or another additional package. Selection of the additional packages determines the scope of the software solution. However, it would obviously be also possible to provide a computer program with more than one core package which would then allow for a user to choose between different sets of basic functions.

Packages can have various relations as to prerequisites or conditions, with a more complex logic being allowed. For example, in the embodiment of Figure 1 core package K is a prerequisite for additional package A (A ⇒ K), or in other words additional package A requires core package K. Further, additional package C requires additional package A (C ⇒ A), additional package E requires either additional package B1 or B2 (E ⇒ B1 v B2) and additional package D requires additional package A and either additional package B1 or additional package B2 (D ⇒ A ^ (B1 ∨ B2)). There is also the possibility that two packages bar each other as it is the case for additional packages B1 and B2 in the example of Figure 1 ( ¬(B1 ^ B2) or B1 ⇒ ¬B2, B2 ⇒ ¬B1). While the bar is symmetrical, the prerequisite is anti-symmetrical, i.e. two packages may not require each other.

If an overlap results in the content of two packages, there might be a conflict when both packages are selected. There are three remedies to such a conflict which can find use alternatively or cumulatively. The first option is to prohibit concurrent selection of certain packages. Incompatible packages, like packages B1 and B2 in the example of Figure 1, may have unlimited overlap. A second option is to implement rules of dominance, e.g. for packages of different status or rank (as for example packages A and C in the example Figure 1) it applies that the higher package (here: C) dominates and may modify settings of the lower package (here: A). The third option consists in prohibiting overlaps for packages of the same status or rank (e.g. packages C and D in the example of Figure 1).

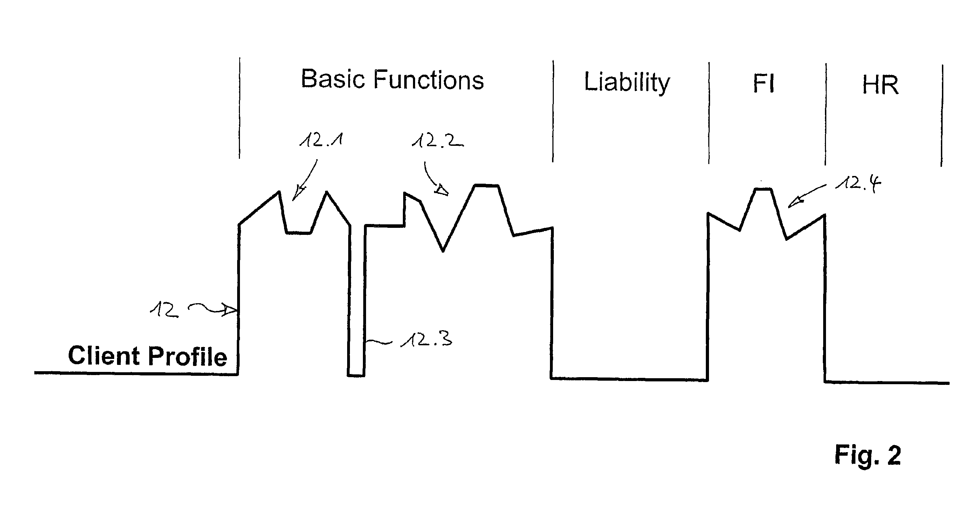

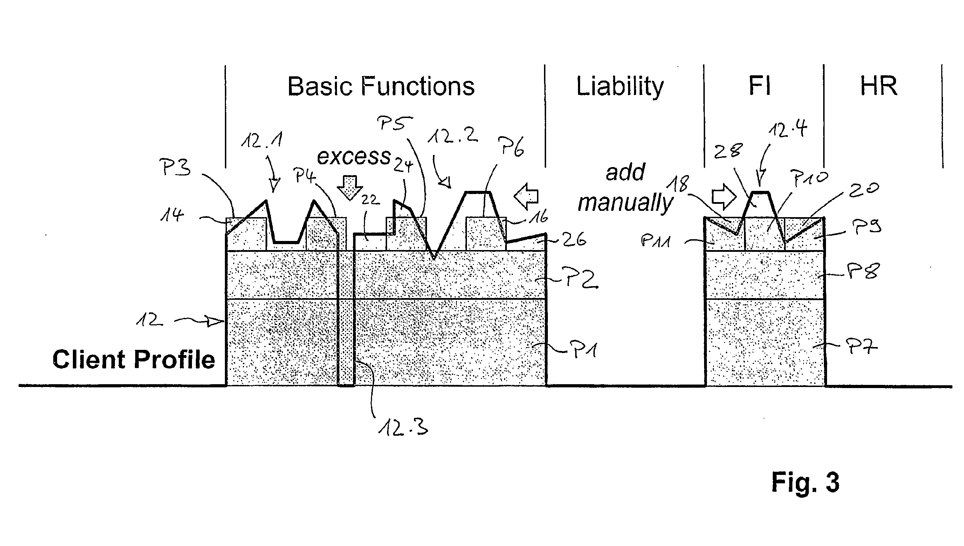

Referring now to Figures 2 and 3, Figure 2 shows a schematic client profile 12 representing the requirement of a client or user as to the desired functions of the software to be installed and customized. In the example of Figure 2, the software to be installed is a computer program in the field of commission payments offering basic functions as well as functions in the fields of Liability, Finance FI and Human Resources HR. According to the client requirement profile of Figure 2, the client desires certain basic functions 12.1 and 12.2, however with a gap 12.3 in the profile of the basic functions which means that the client does not need the function(s) corresponding to the gap 12.3. In the fields of Liability and Human Resources HR, the profile is flat which means that the client does not wish any function in these fields. However, in the field of Finance FI, the client wishes to have functions according to a profile 12.4.

In order to generate a computer program corresponding as close as possible to the profile 12 of Figure 2, the client or user selects certain packages when installing or setting up the computer program. First, he selects a core package of the computer program which is package P1, and subsequently selects a first additional package P2 which builds up on the core package P1. With these two packages, the main portion of the desired basic functions is already available. However, in order to reproduce the fine profile 12.1 and 12.2 of the basic functions, user further selects smaller additional packages P3, P4, P5 and P6 (the packages are shown as rectangles and squares which is for illustrative purposes only).

In the fields of Liability and HR, the user does not select any packages, but in the field of FI he selects a first package P7 which provides for the basic functions of the Finance module and further additional packages P8, P9, P10 and P11 in order to reproduce as finely as possible the profile 12.4.

As can easily be seen from the illustration of Figure 3, it is barely possible to reproduce a fine profile by means of (rectangular) packages. The result is that in some areas there are excess functions (i.e. functions on top of the desired profile) available as for example in the gap 12.3 or in the areas depicted with reference numerals 14, 17, 18 and 20, and in other areas functions which were required are missing as these functions are not covered by the selected packages, as for example in the areas depicted with reference numerals 21, 24, 26 and 28.

The functions missing could be added in a conventional manner by selecting these functions from a menu containing all available functions one after the other (assumed that the software basically provides these functions), and the excess functions could be left or - in case they waste valuable storage - could be deinstalled in conventional manner by choosing the corresponding functions from a menu of all functions one after the other.

Advantageously, the process of setting up a computer program according to the invention is designed very user friendly by providing a list of all packages of the computer program to the user who can select (via an appropriate device like keyboard or mouse) the desired packages, the selected packages appearing in a second list. Once the user has begun to select packages, indication elements appear next to the remaining packages in the list of available packages, indicating whether a package can be selected additionally to the packages already selected, whether a package requires further packages or whether a package is incompatible with a package already selected.

The invention thus provides a useful tool in generating computer programs and installing such a computer program according to the invention in order to create a customized computer program. Handling for users, particularly for inexperienced users, is simplified and setup time is minimized due to the modular concept of the packages constituting the computer program in contrast to the "atomised" design of conventional custom setup systems. The concept of the invention enables a user to load the program according to the invention with its modular packages on his computer or computer system and, in a next step, create or set up various applications according to his needs on the basis of the modular design of the computer program according to the invention. Thus, "to install" the computer program according to the invention means to create and configurate a customized application, which creation can be repeated several times in order to create several distinct customized applications which can co-exist an be run on the same system. With the invention it also becomes possible to ship parts of a computer program separately which leads to an enhanced flexibility of a software producer as well as the software client.

## Claims

1. A method for generating a computer program, wherein the computer program (10) is divided into a plurality of packages (K, A, B1, B2, C, D, E) in modular manner, the packages (K, A, B1, B2, C, D, E) representing in their entirety the complete computer program (10) and being individually selectable by a user when installing the computer program (10) on a computer system in order to create a customized computer program, wherein the packages (K, A, B1, B2, C, D, E) are sorted hierarchically, with packages ranking higher in the hierarchy dominating packages ranking lower in the hierarchy and wherein rules of dominance relating to the ranks of the packages (K, A, B1, B2, C, D, E) among each other are provided, which rules of dominance apply in case the package selection by the user results in an overlap of the content of two of the packages (K, A, B1, B2, C, D, E) and wherein the rules of dominance imply that a package (C) with a higher rank dominates a package (A) with a lower rank and therefore may modify settings of the lower package (A).

2. A method according to claim 1, wherein the plurality of packages (K, A, B1, B2, C, D, E) comprise at least one core package (K) and at least one additional package (A, B1, B2 , C, D, E).

3. A method according to claim 1, wherein the plurality of packages (K, A, B1, B2, C, D, E) comprise one

4. A method according to any one of claims 1 to 3 wherein the plurality of computer program packages (K, A, B1, B2, C, D, E) is packed.

5. A method according to any one of claims 1 to 4, wherein each of the plurality of packages (K, A, B1, B2, C, D, E) represents a functional subunit of the computer program.

6. A computer program (10), the computer program (10) being divided into a plurality of packages (K, A, B1, B2, C, D, E) in modular manner, the packages (K, A, B1, B2, C, D, E) representing in their entirety the complete computer program (10) and being individually selectable by a user when installing the computer program (10) on a computer system in order to create a customized computer program, wherein the packages (K, A, B1, B2, C, D, E) are sorted hierarchically, with packages ranking higher in the hierarchy dominating packages ranking lower in the hierarchy and wherein rules of dominance relating to the ranks of the packages (K, A, B1, B2, C, D, E) among each other are provided, which rules of dominance apply in case the package selection by the user results in an overlap of the content of two of the packages (K, A, B1, B2, C, D, E) and wherein the rules of dominance imply that a package (C) with a higher rank dominates a package (A) with a lower rank and therefore may modify settings of the lower package (A).

7. A method of installing a computer program (10) divided into a plurality of packages (K, A, B1, B2, C, D, E) in modular manner, the packages (K, A, B1, B2, C, D, E) representing in their entirety the complete computer program (10) and being individually selectable by a user when installing the computer program (10) on a computer system in order to create a customized computer program, wherein the packages (K, 11, B1, B2, C, D, E) are sorted hierarchically, with packages ranking higher in the hierarchy dominating packages ranking lower in the hierarchy, the method comprising the steps of:
defining a profile (12) of functions required to be performed by the computer program to be installed;
providing rules of dominance relating to the ranks of the packages (K, A, B1, B2, C, D, E) among each other, which rules of dominance apply in case the package selection by the user results in an overlap of the content of two of the packages (K, A, B1, B2, C, D, E) and wherein the rules of dominance imply that a package (C) with a higher rank dominates a package (A) with a lower rank and therefore may modify settings of the lower package (A)
selecting a first package (P1) of the plurality of packages containing basic functions of the computer program to be installed;
on the basis of the first package, subsequently selecting a further package (P2 to P11) which provides computer program functions building up on the previously selected package while observing combination restrictions;
applying at least one of the rules of dominance if there is an overlap in content between the first package and the subsequent package;
repeating the step of subsequently selecting a further package until the functions of the selected packages meet the previously defined profile (12) of functions.
core package (K) and at least one additional package (A, B1, B2, C, D, E).

8. A method according to claim 7, wherein the first package (P1) selected is a core package (K) of the computer program (10) to be installed.

9. A method according to claim 7 or 8, wherein the further package (P2 to P11) selected is one of a variety of additional packages of the computer program to be installed.

10. A computer-readable medium with a computer program (10) according to claim 6 stored thereon, and further comprising a setup routine allowing for individual selection of packages by a user when installing said computer program (10) on a computer system in order to create a customized computer program according to a method of any one of claims 7 to 9.

11. A computer program setup system comprising means adapted to execute a method according to claim 7, and further comprising interactive means providing a user with setup information about the computer program packages (K, A, B1, B2, C, D, E) and allowing for the user to select among the packages individually in order to create a customized computer program.

12. A computer program setup system according to claim 11, the interactive means enabling the user to define a profile (12) of functions required to be performed by the computer program to be installed and then to select a first package (P1) of the plurality of packages containing basic functions of the computer program to be installed and, on the basis of the first package, to subsequently select a further package (P2 to P11) which provides computer program functions building up on the previously selected package while observing combination restrictions and to repeat the latter step until the functions of the selected packages meet the previously defined profile (12) of functions.

13. A computer program setup system according to claim 11 or 12, wherein the user can select from at least one core package (K) and at least one additional package (A, B1, B2, C, D, E).

14. A computer program setup system according to claim 11 or 12, wherein the user first selects a core package (K) and subsequently can select from at least one additional package (A, B1, B2, C, D, E).

15. A computer program setup system according to any one of claims 11 to 14, wherein the interactive means provides the user with information on possible combinations of packages (K, A, B1, B2, C, D, E).

16. A computer program setup system according to claim 14 or 15, wherein the interactive means provides the user with information on possible combinations of additional packages (A, B1, B2, C, D, E).

17. A computer program with program coding means which are suitable for carrying out a method according to any one of claims 1 to 5 or claims 7 to 9 when the computer program is run on a computer.

## Patentansprüche

1. Verfahren zum Erzeugen eines Computerprogramms, wobei das Computerprogramm (10) in modularer Weise in eine Mehrzahl von Paketen (K, A, B1, B2, C, D, E) unterteilt wird, wobei die Pakete (K, A, B1, B2, C, D, E) in ihrer Gesamtheit das vollständige Computerprogramm (10) darstellen und von einem Benutzer individuell auswählbar sind, wenn er das Computerprogramm (10) auf einem Computersystem installiert, um ein kundenspezifisches Computerprogramm zu erzeugen, wobei die Pakete (K, A, B1, B2, C, D, E) hierarchisch sortiert werden, wobei Pakete, die in der Hierarchie auf einer höheren Rangstufe liegen, Pakete, die in der Hierarchie auf einer niedrigeren Rangstufe liegen, dominieren und wobei Dominanzregeln, welche sich auf die Rangstufen der Pakete (K, A, B1, B2, C, D, E) untereinander beziehen, bereitgestellt werden, wobei diese Dominanzregeln in dem Fall gelten, in dem die Paketauswahl durch den Benutzer zu einer Überlappung des Inhalts von zweien der Pakete (K, A, B1, B2, C, D, E) führt, und wobei die Dominanzregeln implizieren, dass ein Paket (C) mit einer höheren Rangstufe ein Paket (A) mit einer niedrigeren Rangstufe dominiert und daher Einstellungen des niedrigeren Pakets (A) modifizieren kann.

2. Verfahren nach Anspruch 1, wobei die Mehrzahl von Paketen (K, A, B1, B2, C, D, E) mindestens ein Kernpaket (K) und mindestens ein zusätzliches Paket (A, B1, B2, C, D, E) umfasst.

3. Verfahren nach Anspruch 1, wobei die Mehrzahl von Paketen (K, A, B1, B2, C, D, E) ein Kernpaket (K) und mindestens ein zusätzliches Paket (A, B1, B2, C, D, E) umfasst.

4. Verfahren nach einem der Ansprüche 1 bis 3, wobei die Mehrzahl von Computerprogrammpaketen (K, A, B1, B2, C, D, E) gepackt ist.

5. Verfahren nach einem der Ansprüche 1 bis 4, wobei jedes der Mehrzahl von Paketen (K, A, B1, B2, C, D, E) eine funktionelle Untereinheit des Computerprogramms repräsentiert.

6. Computerprogramm (10), wobei das Computerprogramm (10) in modularer Weise in eine Mehrzahl von Paketen (K, A, B1, B2, C, D, E) unterteilt ist, wobei die Pakete (K, A, B1, B2, C, D, E) in ihrer Gesamtheit das vollständige Computerprogramm (10) darstellen und von einem Benutzer individuell auswählbar sind, wenn er das Computerprogramm (10) auf einem Computersystem installiert, um ein kundenspezifisches Computerprogramm zu erzeugen, wobei die Pakete (K, A, B1, B2, C, D, E) hierarchisch sortiert sind, wobei Pakete, die in der Hierarchie auf einer höheren Rangstufe liegen, Pakete, die in der Hierarchie auf einer niedrigeren Rangstufe liegen, dominieren und wobei Dominanzregeln, welche sich auf die Rangstufen der Pakete (K, A, B1, B2, C, D, E) untereinander beziehen, bereitgestellt sind, wobei diese Dominanzregeln in dem Fall gelten, in dem die Paketauswahl durch den Benutzer zu einer Überlappung des Inhalts von zweien der Pakete (K, A, B1, B2, C, D, E) führt, und wobei die Dominanzregeln implizieren, dass ein Paket (C) mit einer höheren Rangstufe ein Paket (A) mit einer niedrigeren Rangstufe dominiert und daher Einstellungen des niedrigeren Pakets (A) modifizieren kann.

7. Verfahren zum Installieren eines Computerprogramms (10), das in modularer Weise in eine Mehrzahl von Paketen (K, A, B1, B2, C, D, E) unterteilt wird, wobei die Pakete (K, A, B1, B2, C, D, E) in ihrer Gesamtheit das vollständige Computerprogramm (10) darstellen und von einem Benutzer individuell auswählbar sind, wenn er das Computerprogramm (10) auf einem Computersystem installiert, um ein kundenspezifisches Computerprogramm zu erzeugen, wobei die Pakete (K, A, B1, B2, C, D, E) hierarchisch sortiert werden, wobei Pakete, die in der Hierarchie auf einer höheren Rangstufe liegen, Pakete, die in der Hierarchie auf einer niedrigeren Rangstufe liegen, dominieren, wobei das Verfahren folgende Schritte aufweist:
Definieren eines Profils (12) von Funktionen, die von dem zu installierenden Computerprogramm auszuführen sind,
Bereitstellen von Dominanzregeln, die sich auf die Rangstufen der Pakete (K, A, B1, B2, C, D, E) untereinander beziehen, wobei diese Dominanzregeln in dem Fall gelten, in dem die Paketauswahl durch den Benutzer zu einer Überlappung des Inhalts von zweien der Pakete (K, A, B1, B2, C, D, E) führt, und wobei die Dominanzregeln implizieren, dass ein Paket (C) mit einer höheren Rangstufe ein Paket (A) mit einer niedrigeren Rangstufe dominiert und daher Einstellungen des niedrigeren Pakets (A) modifizieren kann,
Auswählen eines ersten Pakets (P1) aus der Mehrzahl von Paketen, das Grundfunktionen des zu installierenden Computerprogramms enthält,
anschließendes Auswählen eines weiteren Pakets (P2 bis P11) auf der Grundlage des ersten Pakets, welches weitere Paket Computerprogrammfunktionen bereitstellt, die auf das zuvor ausgewählte Paket aufbauen, während Kombinationsbeschränkungen beachtet werden,
Anwenden von mindestens einer der Dominanzregeln, falls zwischen dem ersten Paket und dem folgenden Paket eine Inhaltsüberlappung auftritt,
Wiederholen des Schritts des anschließenden Auswählens eines weiteren Pakets, bis die Funktionen der ausgewählten Pakete das zuvor definierte Profil (12) von Funktionen erfüllen.

8. Verfahren nach Anspruch 7, wobei das erste ausgewählte Paket (P1) ein Kernpaket (K) des zu installierenden Computerprogramms (10) ist.

9. Verfahren nach Anspruch 7 oder 8, wobei das weitere ausgewählte Paket (P2 bis P11) eines von einer Vielzahl zusätzlicher Pakete des zu installierenden Computerprogramms ist.

10. Computerlesbares Medium mit einem darauf gespeicherten Computerprogramm (10) nach Anspruch 6, welches des weiteren eine Einrichtungsroutine aufweist, die eine individuelle Auswahl von Paketen durch einen Benutzer ermöglicht, wenn das Computerprogramm (10) auf einem Computersystem installiert wird, um ein kundenspezifisches Computerprogramm gemäß einem Verfahren nach einem der Ansprüche 7 bis 9 zu erzeugen.

11. System zum Einrichten eines Computerprogramms mit Mitteln, die dazu eingerichtet sind, ein Verfahren nach Anspruch 7 auszuführen, welches des weiteren ein interaktives Mittel aufweist, das einem Benutzer Einrichtungsinformationen über die Computerprogrammpakete (K, A, B1, B2, C, D, E) bereitstellt und es dem Benutzer ermöglicht, aus den Paketen individuell auszuwählen, um ein kundenspezifisches Computerprogramm zu erzeugen.

12. System zum Einrichten eines Computerprogramms nach Anspruch 11, wobei es das interaktive Mittel dem Benutzer ermöglicht, ein Profil (12) von Funktionen zu definieren, die von dem zu installierenden Computerprogramm auszuführen sind, und dann ein erstes Paket (P1) aus der Mehrzahl von Paketen, das Grundfunktionen des zu installierenden Computerprogramms enthält, auszuwählen, und auf der Grundlage des ersten Pakets anschließend ein weiteres Paket (P2 bis P11) auszuwählen, das Computerprogrammfunktionen bereitstellt, die auf das zuvor ausgewählte Paket aufbauen, während Kombinationsbeschränkungen beachtet werden, und den letztgenannten Schritt zu wiederholen, bis die Funktionen der ausgewählten Pakete das zuvor definierte Profil (12) von Funktionen erfüllen.

13. System zum Einrichten eines Computerprogramms nach Anspruch 11 oder 12, wobei der Benutzer aus mindestens einem Kernpaket (K) und mindestens einem zusätzlichen Paket (A, B1, B2, C, D, E) auswählen kann.

14. System zum Einrichten eines Computerprogramms nach Anspruch 11 oder 12, wobei der Benutzer zuerst ein Kernpaket (K) auswählt und anschließend aus mindestens einem zusätzlichen Paket (A, B1, B2, C, D, E) auswählen kann.

15. System zum Einrichten eines Computerprogramms nach einem der Ansprüche 11 bis 14, wobei das interaktive Mittel dem Benutzer Informationen über mögliche Kombinationen der Pakete (K, A, B1, B2, C, D, E) bereitstellt.

16. System zum Einrichten eines Computerprogramms nach Anspruch 14 oder 15, wobei das interaktive Mittel dem Benutzer Informationen über mögliche Kombinationen von zusätzlichen Paketen (A, B1, B2, C, D, E) bereitstellt.

17. Computerprogramm mit Programmcodemitteln, die geeignet sind, um ein Verfahren nach einem der Ansprüche 1 bis 5 oder 7 bis 9 auszuführen, wenn das Computerprogramm auf einem Computer ausgeführt wird.

## Revendications

1. Procédé pour générer un programme informatique, dans lequel le programme informatique (10) est divisé en une pluralité de progiciels (K, A, B1, B2, C, D, E) d'une manière modulaire, les progiciels (K, A, B1, B2, C, D, E) représentant dans leur totalité le programme informatique complet (10) et étant individuellement sélectionnables par un utilisateur lors de l'installation du programme informatique (10) sur un système informatique afin de créer un programme informatique personnalisé, dans lequel les progiciels (K, A, B1, B2, C, D, E) sont triés hiérarchiquement, les progiciels ayant un rang supérieur dans la hiérarchie dominant les progiciels de rang inférieur dans la hiérarchie et dans lequel des règles de dominance relatives aux rangs des progiciels (K, A, B1, B2, C, D, E) entre eux sont fournies, lesquelles règles de dominance s'appliquent dans le cas où la sélection de progiciels par l'utilisateur donne en résultat un chevauchement du contenu de deux des progiciels (K, A, B1, B2, C, D, E) et dans lequel les règles de dominance impliquent qu'un progiciel (C) ayant un rang supérieur domine un progiciel (A) ayant un rang inférieur et par conséquent peut modifier des réglages du progiciel inférieur (A).

2. Procédé selon la revendication 1, dans lequel la pluralité de progiciels (K, A, B1, B2, C, D, E) comporte au moins un progiciel principal (K) et au moins un progiciel supplémentaire (A, B1, B2, C, D, E).

3. Procédé selon la revendication 1, dans lequel la pluralité de progiciels (K, A, B1, B2, C, D, E) comporte un progiciel principal (K) et au moins un progiciel supplémentaire (A, B1, B2, C, D, E).

4. Procédé selon l'une quelconque des revendications 1 à 3, dans lequel la pluralité de progiciels de programme informatique (K, A, B1, B2, C, D, E) sont assemblés.

5. Procédé selon l'une quelconque des revendications 1 à 4, dans lequel chacun de la pluralité de progiciels (K, A, B1, B2, C, D, E) représente une sous-unité fonctionnelle du programme informatique.

6. Programme informatique (10), le programme informatique (10) étant divisé en une pluralité de progiciels (K, A, B1, B2, C, D, E) d'une manière modulaire, les progiciels (K, A, B1, B2, C, D, E) représentant dans leur totalité le programme informatique complet (10) et étant individuellement sélectionnables par un utilisateur lors de l'installation du programme informatique (10) sur un système informatique afin de créer un programme informatique personnalisé, dans lequel les progiciels (K, A, B1, B2, C, D, E) sont triés hiérarchiquement, les progiciels de rang supérieur dans la hiérarchie dominant les progiciels de rang inférieur dans la hiérarchie et dans lequel des règles de dominance se rapportant aux rangs des progiciels (K, A, B1, B2, C, D, E) entre eux sont fournies, lesquelles règles de dominance s'appliquent dans le cas où la sélection de progiciels par l'utilisateur donne en résultat un chevauchement du contenu de deux des progiciels (K, A, B1, B2, C, D, E) et dans lequel les règles de dominance impliquent qu'un progiciel (C) ayant un rang supérieur domine un progiciel (A) ayant un rang inférieur et par conséquent peut modifier des réglages du progiciel inférieur (A).

7. Procédé d'installation d'un programme informatique (10) divisé en une pluralité de progiciels (K, A, B1, B2, C, D, E) d'une manière modulaire, les progiciels (K, A, B1, B2, C, D, E) représentant dans leur totalité le programme informatique complet (10) et étant individuellement sélectionnables par un utilisateur lors de l'installation du programme informatique (10) sur un système informatique afin de créer un programme informatique personnalisé, dans lequel les progiciels (K, A, B1, B2, C, D, E) sont triés hiérarchiquement, les progiciels de rang supérieur dans la hiérarchie dominant les progiciels de rang inférieur dans la hiérarchie, le procédé comportant les étapes consistant à :
définir un profil (12) de fonctions requises pour être exécutées par un programme informatique destiné à être installé ;
fournir des règles de dominance se rapportant aux rangs des progiciels (K, A, B1, B2, C, D, E) entre eux, lesquelles règles de dominance s'appliquent dans le cas où la sélection de progiciels par l'utilisateur donne en résultat un chevauchement du contenu de deux des progiciels (K, A, B1, B2, C, D, E) et dans lequel les règles de dominance impliquent qu'un progiciel (C) ayant un rang supérieur domine un progiciel (A) ayant un rang inférieur et par conséquent peut modifier des réglages du progiciel inférieur (A) ;
sélectionner un premier progiciel (P1) de la pluralité de progiciels contenant des fonctions de base du programme informatique destiné à être installé ;
sur la base du premier progiciel, sélectionner par la suite un autre progiciel (P2 à P11) qui fournit des fonctions de programme informatique assemblées sur le progiciel précédemment sélectionné tout en observant des restrictions de combinaison ;
appliquer au moins l'une des règles de dominance s'il y a un chevauchement de contenu entre le premier progiciel et le progiciel suivant ;
répéter l'étape de sélection suivante d'un autre progiciel jusqu'à ce que les fonctions des progiciels sélectionnés satisfassent au profil préalablement défini (12) de fonctions.

8. Procédé selon la revendication 7, dans lequel le premier progiciel (P1) sélectionné est un progiciel principal (K) du programme informatique (10) à installer.

9. Procédé selon la revendication 7 ou 8, dans lequel l'autre progiciel (P2 à P11) sélectionné est l'un d'une variété de progiciels supplémentaires du programme informatique à installer.

10. Support lisible par ordinateur sur lequel est mémorisé un programme informatique (10) selon la revendication 6, et comportant de plus une routine d'initialisation permettant une sélection individuelle de progiciels par un utilisateur lors de l'installation dudit programme informatique (10) sur un système informatique afin de créer un programme informatique personnalisé conformément à un procédé selon l'une quelconque des revendications 7 à 9.

11. Système d'initialisation de programme informatique comportant des moyens adaptés pour exécuter un procédé selon la revendication 7, et comportant de plus des moyens interactifs fournissant à un utilisateur des informations d'initialisation concernant les progiciels de programme informatique (K, A, B1, B2, C, D, E) et permettant à l'utilisateur de sélectionner parmi les progiciels individuellement afin de créer un programme informatique personnalisé.

12. Système d'initialisation de programme informatique selon la revendication 11, les moyens interactifs permettant à un utilisateur de définir un profil (12) de fonctions requises pour être exécutées par le programme informatique à installer et ensuite de sélectionner un premier progiciel (P1) de la pluralité de progiciels contenant des fonctions de base du programme informatique à installer et, sur la base du premier progiciel, de sélectionner par la suite un autre progiciel (P2 à P11) qui fournit des fonctions de programme informatique assemblées sur le progiciel précédemment sélectionné tout en observant des restrictions de combinaison et de répéter la dernière étape jusqu'à ce que les fonctions des progiciels sélectionnés satisfassent au profil préalablement défini (12) de fonctions.

13. Système d'initialisation de programme informatique selon la revendication 11 ou 12, dans lequel l'utilisateur peut sélectionner parmi au moins un progiciel principal (K) et au moins un progiciel supplémentaire (A, B1, B2, C, D, E) .

14. Système d'initialisation de programme informatique selon la revendication 11 ou 12, dans lequel l'utilisateur sélectionne d'abord un progiciel principal (K) et par la suite peut sélectionner au moins un progiciel supplémentaire (A, B1, B2, C, D, E).

15. Système d'initialisation de programme informatique selon l'une quelconque des revendications 11 à 14, dans lequel les moyens interactifs fournissent à l'utilisateur des informations sur de possibles combinaisons de progiciels (K, A, B1, B2, C, D, E)

16. Système d'initialisation de programme informatique selon la revendication 14 ou 15, dans lequel les moyens interactifs fournissent à l'utilisateur des informations sur de possibles combinaisons de progiciels supplémentaires (A, B1, B2, C, D, E).

17. Programme informatique ayant des moyens de codage de programme qui sont appropriés pour exécuter un procédé selon l'une quelconque des revendications 1 à 5 ou des revendications 7 à 9 lorsque le programme informatique est exécuté sur un ordinateur.
